Europäisches Patentamt

European Patent Office

Office européen des brevets

(11) Numéro de publication: **0 220 114**
**B1**

(12) **FASCICULE DE BREVET EUROPEEN**

(45) Date de publication du fascicule du brevet: **30.05.90**

(51) Int. Cl.⁵: **B 29 C 63/14**

(21) Numéro de dépôt: **86402251.2**

(22) Date de dépôt: **10.10.86**

(54) **Procédé et dispositif pour revêtir d'une pellicule une gaine isolante, en particulier en fibres minérales.**

(30) Priorité: **10.10.85 DE 3536174**

(43) Date de publication de la demande:
**29.04.87 Bulletin 87/18**

(45) Mention de la délivrance du brevet:
**30.05.90 Bulletin 90/22**

(84) Etats contractants désignés:
**AT BE CH DE FR GB GR IT LI LU NL SE**

(56) Documents cités:
**DE-A-2 718 761**
**DE-C-3 536 174**
**FR-A-2 224 291**
**US-A-3 121 253**
**US-A-3 658 614**
**US-A-3 755 039**

(73) Titulaire: **ISOVER SAINT-GOBAIN**
**Les Miroirs 18, avenue d'Alsace**
**F-92400 Courbevoie (FR)**

(72) Inventeur: **Berscheid, Peter**
**Bensberger Strasse 29**
**D-5067 Kürten-Spitze (DE)**
Inventeur: **Friesdorf, Jakob**
**Kalmüntener Strasse 21**
**D-5060 Bergisch Gladbach 2 (DE)**

(74) Mandataire: **Leconte, Jean-Gérard et al**
**Saint-Gobain Recherche 39, Quai Lucien Lefranc**
**F-93304 Aubervilliers Cedex (FR)**

Courier Press, Leamington Spa, England.

## Description

La présente invention concerne un procédé et un dispositif de revêtement d'una gaine isolante, notamment en fibres minérales, par une pellicule comportant une couche d'adhésif pouvant être activé à la chaleur.

Selon le procédé décrit par le brevet FR—A—2 224 291 (DE—A—2 416 472) le revêtement d'une gaine isolante s'effectue au moyen d'un dispositif qui comporte deux rouleaux entraînés en rotation et disposés parallèlement l'un à côté de l'autre pour supporter la gaine isolante et la faire tourner. Il est prévu un dispositif presseur diamétralement opposé à ces rouleaux, pouvant être entraîné à la vitesse périphérique des rouleaux et mobile entre une position de travail et une position rétractée d'alimentation et d'éjection. Ce dispositif presse la gaine isolante contre les rouleaux, l'amenée de la pellicule étant assurée par un dispositif orienté perpendiculairement aux rouleaux. Le rouleau voisin du dispositif d'amenée de la pellicule est en outre chauffant, ce qui assure l'activation de l'adhésif de la pellicule.

Le dispositif selon FR—A—2 224 291 fonctionne de la manière suivante: une gaine isolante non revêtue et non refendue est glissée axialement entre les rouleaux et le dispositif presseur, retracté au moyen d'un transporteur à chaine. Le dispositif presseur est déplacé vers le bas jusqu'à ce qu'il vienne se poser sur la gaine isolante. Le dispositif presseur, qui comporte des sangles de pression tournantes et les deux rouleaux sont alors entraînés séparément ce sorte que la gaine isolante, ainsi montée flottante, est mue en rotation. Simultanément, une section de la pellicule préalablement coupée à longueur est introduite perpendiculairement, entre le rouleau chauffé et la gaine isolante. Lors de son passage sur le rouleau chauffant, cette pellicule est chauffée et l'adhésif est ainsi activé. La pellicule est ensuite pressée par le rouleau chauffant contre la gaine isolante et est envidée autour de celle-ci et ce, jusqu'à ce que la gaine isolante ait effectué une révolution un quart. Le dispositif presseur s'écarte et la gaine isolante revêtue est extraite axialement du poste de revêtement au moyen du transporteur à chaine déjà cité.

Ce procédé connu de revêtement ne convient cependant que pour des gaines isolantes non refendues, qui présentent pratiquement une surface externe sans fin autour de laquelle la pellicule doit simplement être envidée. Il n'est pas nécessaire de positionner précisément la gaine isolante afin d'obtenir une application exacte de la pellicule sur le bord de la fente longitudinale. Même si la pellicule est entraînée de façon incorrecte lors de sa réception entre le rouleau chauffant et la gaine isolante, c'est-à-dire qu'elle s'écarte légèrement d'une position parallèle à l'axe ou que l'adhérence initiale est défectueuse, on obtient un produit d'aspect extérieur satisfaisant, la pellicule se recouvrant elle-même sur une longueur correspondant au quart de la circonférence de la gaine isolante. De plus, un tel dispositif a une durée de cylce relativement grande, une nouvelle gaine isolante ne pouvant être glissée sur le rouleau en vue de son revêtement qu'après que la gaine isolante précédente ait évacuée le dispositif.

Il est aussi connu de US—A—3 121 253 ou US—A—3 755 039 des procédés d'obtention de gaines isolantes revêtues refendues selon lesquels les gaines sont fendues verticalement puis amenées en roulant jusqu'à la feuille de revêtement, préalablement munie d'une couche adhésive déposée par pulvérisation. Outre qu'ils nécessitent un équipement de pulvérisation de l'adhésif, ces procédés présentent l'inconvénient de ne pouvoir opérer qu'avec des gaines d'un même diamètre extérieur.

L'invention a pour but un procédé et un dispositif améliorés de revêtement d'une gaine isolante, notamment fibres minérales par une pellicule comportant une couche d'adhésif activé à la chaleur, procédé tel que des gaines isolantes éventuellement refendues longitudinalement puissent être revêtues de manière totalement automatique sur toute leur surface en un cycle le plus court possible, c'est-à-dire au rythme de leur fabrication. De plus, conformément au but fixé pour l'invention, une fixation exacte de la pellicule de part et d'autre de la fente longitudinale des gaines isolantes doit être garantie, la fente longitudinale des gaines devant être produite de préférence immédiatement avant l'opération de revêtement proprement dite.

Ce but est atteint par le fait que dans le procédé de revêtement d'une gain isolante, en particulier en fibres minérales, présentant éventuellement une fente longitudinale, par une pellicule comportant une couche d'ahésif activé par de la chaleur, selon lequel la gaine isolante coopère avec un rouleau chauffant à axe parallèle entraîné en rotation, tandis que la pellicule est amenée perpendiculairement entre la gaine isolante et le rouleau chauffant, on opère de la manière suivante: afin d'assurer un entraînement initial exact de la pellicule par la gaine isolante, la pellicule est amenée dans une position préliminaire, la section d'extrémité libre de la pellicule étant alors légèrement coudée vers le bas au moyen d'une barre également à axe parallèle, puis la pellicule est amenée dans une position d'attente, sa section d'extrémité coudée venant se placer par son bord extérieur sur le rouleau chauffant de hauteur réglable, positionné initialement à une courte distance de la surface externe de la gaine isolante, de telle sorte que dans cette position, se produise une activation initiale de l'adhésif de la pellicule, puis le rouleau chauffant est déplacé en direction de la gaine isolante et, après application du bord extérieur de la pellicule contre la gaine isolante, est maintenu pendant un court laps de temps dans cette position soulevée, l'opération de revêtement proprement dite étant entamée par le fait que le rouleau chauffant et la gaine isolante sont entraînés séparément en sens opposés et à la même vitesse périphérique.

L'invention concerne également un dispositif pour la mise en oeuvre du procédé selon l'invention comportant différents postes et dispositifs présentant les caractéristiques suivantes:

. le poste d'alimentation comprend un mandrin récepteur présentant une fente axiale, sur lequel la gaine isolante peut être glissée au moyen d'un bras transporteur pouvant être déplacé en direction du mandrin récepteur et un organe de coupe qui, pour ménager éventuellement une fente longitudinale continue dans la gaine isolante, s'étend à travers la fente axiale du mandrin récepteur,

. le dispositif envideur comporte un mandrin envideur pouvant être entraîné en rotation, sur lequel la gaine isolante refendue peut encore être glissée au moyen du bras transporteur du poste d'alimentation, le mandrin envideur se raccordant coaxialement au mandrin récepteur, pouvant être amené en prise en bout avec celui-ci par une jonction à emboîtement tournante et comportant une languette de guidage et d'entraînement radiale saillante destinée à être engagée dans la fente longitudinale de la gaine isolante

. le poste de revêtement comprend un rouleau chauffant pouvant être entraîné en rotation et destiné à activer l'adhésif de la pellicule, le rouleau chauffant étant réglable en hauteur et disposé en-dessous du mandrin envideur parallèlement à l'axe de celui-ci,

. le dispositif d'amenée de la pellicule, perpendiculaire au poste de revêtement comporte une barre s'étendant parallèlement à l'axe du rouleau chauffant et pouvant pivoter autour de son axe.

Les avantages obtenus au moyen de l'invention résident, en particulier, dans le fait que par l'activation initiale de l'adhésif de la pellicule et par la phase de collage associée, on obtient un entraînement initial exact de la pellicule par la gaine isolante. Une vitesse de revêtement relativement élevée, et par là un cycle d'une durée relativement courte égale par exemple à 7 secondes, sont ainsi possibles. D'autre part, la pellicule adhère solidement dans la zone des bords de sa fente longitudinale et de cette façon ne peut pas se détacher lors du montage de la gaine isolante.

Lorsqu'une gaine isolante déjà refendue doit être revêtue, il est avantageux de glisser cette gaine sur un mandrin d'envidage à axe parallèle à celui du rouleau chauffant pourvu d'une languette de guidage et d'entraînement faisant saillie perpendiculairement, vers le bas dans le sens radial, et s'engageant dans la fente longitudinale de la gaine, isolante et d'amener la section d'extrémité coudée vers le bas de la pellicule simultanément dans une position d'attente dans laquelle elle est tangente, par son bord extérieur, à un plan imaginaire qui s'étend dans le prolongement de la face voisine de la fente longitudinale de la gain isolante. Une telle position d'attente pour la pellicule assure que cette pellicule soit ajustée exactement sur le bord de la fente longitudinale peu de temps avant le début de l'opération de revêtement proprement dite.

Pour le cas d'un revêtement d'une gaine isolante revêtement s'effectuant au rythme de son processus de fabrication, afin d'obtenir un déroulement entièrement continu du processus, on utilise de préférence un procédé dans lequel une gaine isolante non refendue provenant d'une machine à fabriquer des gaines est glissée par un bras de transport de manière continue sur un mandrin récepteur coaxial au mandrin d'envidage et la fente longitudinale est alors ménagée dans la gaine isolante par un organe de coupe, la gaine isolante refendue ainsi préparée étant alors glissée entièrement par un avancement continu du bras de transport sur le mandrin d'envidage coaxial au mandrin récepteur.

Il est également avantageux que lors de l'opération de revêtement proprement dite, le rouleau chauffant et le mandrin envideur soient entraînés jusqu'à ce qu'une rotation de la gaine isolante revêtue d'environ 340 à 350° soit obtenue et qu'ensuite le rouleau chauffant reste encore pendant un court laps de temps dans cette position en vue d'un collage de fermeture, puis soit abaissé dans sa position de départ. Cette interruption de l'opération de revêtement garantit que la languette de fermeture ne colle pas à la pellicule déjà appliquée sur la gaine isolante.

Le dispositif selon l'invention permet la mise en oeuvre d'une chaine de fabrication travaillant entièrement en continu, qui peut en outre servir au revêtement par lots de gaines isolantes présentant des dimensions en coupe différentes. Ceci est possible d'une manière simple par le fait que, pour diverses gammes de diamètres intérieurs des gaines isolantes, on tient prêts des mandrins récepteurs et envideurs adaptés aux dimensions respectives, des différences de diamètre extérieur des gaines isolantes peuvent être compensées par le rouleau chauffant réglable en hauteur.

Finalement, il est avantageux d'utiliser un dispositif de transfert pour les gaines isolantes revêtues afin d'obtenir une installation fonctionnant d'une manière entièrement automatique, auquel cas, il est conseillé d'utiliser un dispositif de refroidissement installé en aval pour évacuer la chaleur superficielle des gaines isolantes revêtues qui, sinon, pourrait conduire à une collage de la languette de fermeture dépassant dans l'état emballé des gaines isolantes.

D'autres détails, particularités et avantages de l'invention ressortiront de la description d'un exemple de réalisation donné avec référence aux dessins annexés, dans lesquels:

La figure 1 est une vue en élévation de côté du dispositif conforme à l'invention.

La figure 2 est une vue en élévation de côté du poste de revêtement avec un dispositif d'amenée pour la pellicule et un dispositif de transfert et de refroidissement.

La figure 3 est un schéma de principe (3a à 3d) de l'opération de revêtement.

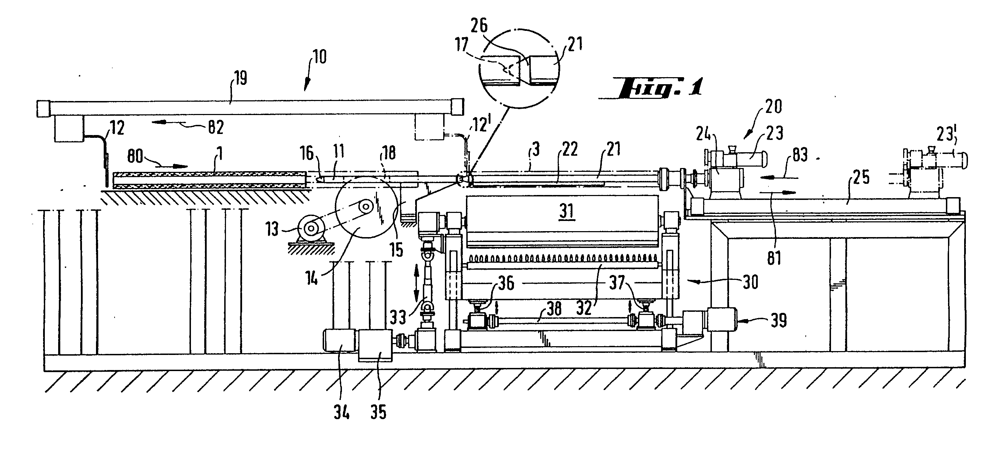

Sur la figure 1, un poste d'alimentation designé par 10 est représenté à gauche de façon simplifiée. Il comporte un mandrin récepteur 11, un bras de transport 12 qui peut être déplacé en direction du mandrin récepteur Il est un organe ce coupe 14 entraîné par un moteur électrique 13. La mandrin récepteur 11 est fixé au moyen d'une tôle ensiforme 15. L'extrémité axiale gauche 16 du mandrin récepteur 11 est de forme conique afin de mieux recevoir une gaine isolante non refendue 1 à revêtir qui, dans le cas présent, est en laine de verre. L'extrémité axiale droite d'un mandrin récepteur 11 présente un creux conique 17. Pour obtenir une fente longitudinale continue 2 dans la gaine isolante 1, l'organe de coupe 14, ici un couteau circulaire, est agencé de manière telle qu'il s'engage en 18 dans une fente axiale du mandrin récepteur 11. Le bras de transport 12 est fixé à un vérin hydraulique ou pneumatique 19 à double effet et peut être amené dans la position 12' illustrée en traits interrompus.

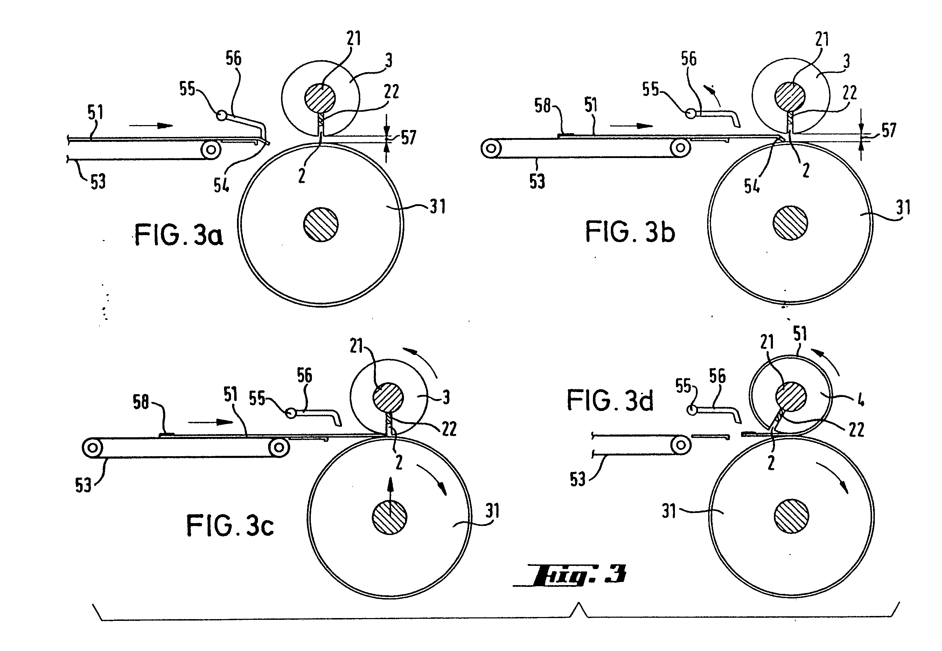

Au milieu de la figure 1 est représenté un dispositif d'envidage 20 qui comprend, coaxialement au mandrin récepteur 11, un mandrin envideur 21 comportant une languette radiale 22 de guidage et d'entraînement saillante et une boite d'engrenages 24 entraînée par l'intermédiaire d'un moteur électrique 23, mu jusqu'à une position 23' au moyen d'un vérin hydraulique ou pneumatique à double effet 25. L'épaisseur de la languette de guidage 22 est ici choisie telle qu'elle soit légèrement inférieure à la largeur libre de la fente longitudinale 2 (voir figure 3) de la gaine isolante refendue 3. L'extrémité libre du mandrin envideur 21 est en forme de cone 26, afin de former avec le mandrin récepteur 11, une jonction tournante 17 à emboîtement de centrage.

Sous le dispositif d'envidage 20 se trouve le poste de revêtement 30 qui comprend un rouleau 31 chauffé par une rampe à gaz 32. Le rouleau chauffant 31 est entraîné, par l'intermédiaire d'une tige à cardan 33 télescopique, par un moteur électrique 34 avec une boite d'engrenages 35. De plus, le rouleau chauffant 31 et la rampe à gaz 32 sont montés réglables en hauteur, au moyen de deux tiges filetées reliées par un arbre 38 à un groupe 39 d'entraînement électrique à réducteur.

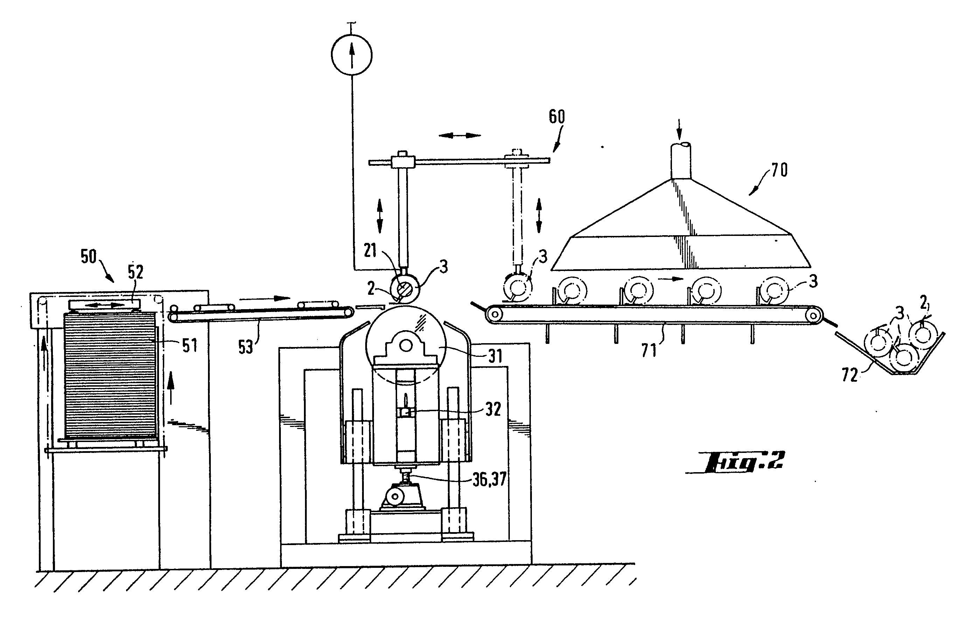

A la figure 2, schéma en élévation de côté d'un dispositif conforme à l'invention est représenté un dispositif d'amenée 50 pour des pellicules 51 formées par exemple d'une feuille en aluminium, renforcée par un tissu de verre, le côté revêtu du tissue de verre étant enduit de polyéthylène servant d'ahésif activable. Le dispositif d'amenée 50 est constitué essentiellement d'un margeur automatique qui, au moyen de la ventouse 52, fournit chaque fois une pellicule 51 déjà coupée à longueur et délivrée par une bande transporteuse 53.

Un dispositif de transfert 60 fonctionnant par dépression est également schématisé à la figure 2. Il est destiné à évacuer la gaine isolante revêtue 4. Est encore schématisé, un dispositif de refroidissement 70 par lequel les gaines isolantes fraîchement revêtues 4 sont refroidies par circulation d'air, de telle sorte que les gaines isolantes 4 terminées puissent, par exemple, être mises en caisse directement après l'opération de revêtement sans entreposage intermédiaire.

Le procédé de revêtement d'une gaine isolante 1 est exécuté avec un dispositif conforme à l'invention en une durée de cycle égale à par exemple 7 secondes, de la manière décrite ci-après: par l'intermédiaire d'une goulotte latérale, non représentée, une gain isolante non refendue 1 est amenée coaxialement au mandrin récepteur 11 du poste d'alimentation 10. Le gaine isolante 1 est ensuite glissée à l'aide du bras de transport 12 de manière continue sur le mandrin récepteur 11, dans le sens de la flèche 80. Si nécessaire la fente longitudinale 2 est alors simultanément taillée au fraisée dans la gaine isolante 1, au moyen du couteau circulaire tournant 12. La section d'extrémité conique 16 du mandrin récepteur 11 assure alors la réception, correctement centrée, de la gaine isolante 1 sur le mandrin récepteur 11, de section un peu plus petite que la section libre de l'alésage de la gaine isolante 1. Sous l'effet de l'avancement ininterrompu du bras de transport 12, la gaine isolante refendue 3 est glissée sur la mandrin envideur 21 coaxial au mandrin récepteur 11, jusqu'à ce que le bras de transport 12 ait atteint la position 12' représentée en traits interrompus. Lors de cette opération de glissement, la gaine isolante 3 est d'une part, fixée en position par la tôle ensiforme 15 qui est engagée dans la fente longitudinale 2 et est d'autre part—sans pouvoir tourner—positionnée pour l'opération de revêtement proprement dite, par la languette de guidage 22 qui s'engage aussi dans la fente longitudinale 2. Pendant l'opération de glissement de la gaine isolante 1 (3) sur le mandrin récepteur 11 et sur le mandrin envideur 21, une pellicule 51 est amenée dans une position préliminaire par le dispositif d'amenée 50, par l'intermédiaire de la bande transporteuse 53 (figure 3a). La section d'extrémité libre 54 de la pellicule 51 est coudée légèrement vers le bas à l'aide d'une barre 56 montée sur un pivot 55 et dont l'axe est parallèle à celui des rouleaux chauffants 31. La pellicule 51 est alors amenée dans une position d'attente (figure 3b), de telle sorte que la section coudée 54 vienne se placer par son bord extérieur sur le rouleau chauffant 31 positionné initialement à une courte distance 57 de la surface externe de la gaine isolante 3, le bord extérieur de la section 54 étant alors tangent à un plan imaginaire qui s'étend dans le prolongement de la face voisine de la fente longitudinale de la gaine isolante 3. La distance 57 peut être par exemple de 10 mm. Le contact de la section d'extrémité 54 de la pellicule 51 avec le rouleau 31, chauffé par la rampe à gaz 32 à environ 280°C, provoque déjà une activation initiale de l'adhésif de la pellicule 51. Le rouleau chauffant 31 est alors soulevé—au moyen des tiges filetées 36, 37 entraînées par moteur—jusqu'à ce que soit établi un contact superficiel entre le rouleau chauffant 31 avec la pellicule 51 et la surface externe de la gaine isolante 3. Lorsque le bord extérieur de la pellicule 51 est appliqué contre la gaine isolante 3, le rouleau chauffant 31 est maintenu pendant environ 3 à 3/10 de seconde dans cette position soulevée (figure 3c), avant que l'opération de revêtement proprement cite soit amorcée. Après ce court temps d'arrêt, le rouleau chauffant 31 est entraîné par l'intermédiaire du mandrin envideur 21 au moyen du moteur 23 et de la boite d'engrenages 24 en sens opposés mais à la même vitesse et ce, jusqu'à ce que la gaine isolante, à présent revêtue, est effectuée une rotation d'environ 340 à 350° (figure 3d).

Le rouleau chauffant 31 s'immobilisé à nouveau pendant un court laps de temps (de 2 à 3/10 de seconde) pour produire un collage de fermeture, puis est à nouveau abaissé en position de départ. Pendant l'abaissement ou rouleau chauffant 31, le mandrin envideur 21 est extrait (comme indiqué en 23') de la gaine isolante revêtue 4 au moyen du vérin 25, suivant le sens de la flèche 81. Simultanément le dispositif de transfert 60 pivote au moyen d'un ventouse en direction de la gaine isolante 4, saisit cette gaine 4 et la transfère sur une bande transporteuse 71 du dispositif ce refroidissement 70, où les gaines isolantes 4 sont traitées par de l'air froid avant de tomber dans une goulotte 72 en vue de leur emballage, par exemple dans des cartons.

Pendant l'opération de revêtement proprement dite, le bras de transport revient à partir de la position 12', dans le sens de la flèche 82, dans sa position de départ et peut ainsi à nouveau glisser une gaine isolante 1 sur le mandrin récepteur 11. De plus, le mandrin envideur 21 se déplace immédiatement après le pivotement du dispositif de transfert 60 à partir de la position 23', dans le sens de la flèche 83, pour revenir dans sa position de départ et tourne alors de telle façon que sa languette de guidage 22 soit à nouveau orientée verticalement vers le bas. Le procédé décrit se déroule alors à nouveau entièrement automatiquement en vue du revêtement d'une autre gaine isolante 1.

La pellicule 51 peut aussi présenter une section d'extrémité 58 comprenant une bande d'ahdésif s'étendant sur toute la largeur de la pellicule, recouverte par une bande de garde à arracher, de sorte que, lorsque la gaine isolante 4 a été appliquée, par exemple sur une section de conduite à isoler, il est possible après enlèvement de la bande de garde, de coller la patte restante à la gaine isolante 4 en fermant la fente longitudinale 3 de celle-ci.

**Revendications**

1. Procédé de revêtement d'une gaine isolante, en particulier en fibres minérales, présentant éventuellement une fente longitudinale continue, par une pellicule comportant une couche d'adhésif active par de la chaleur, selon lequel la gaine isolante coopère avec un rouleau chauffant à axe parallèle entraîné en rotation, tandis que la pellicule est amenée perpendiculairement entre la gaine isolante et le rouleau chauffant, procédé caractérisé en ce qu'afin d'assurer un entraînement initial exact de la pellicule (51) par la gaine isolante (3), la pellicule (51) est amenée dans une position préliminaire, la section d'extrémité libre (54) de la pellicule (51) étant alors légèrement coudée vers le bas au moyen d'une barre (56) également à axe parallèle, puis la pellicule est amenée dans une position d'attente, sa section d'extrémité coudée (54) venant se placer par son bord extérieur sur le rouleau chauffant (31) de hauteur réglable, positionné initialement à une courte distance (57) de la surface externe de la gaine isolante (3), de telle sorte que dans cette position, se produise une activation initiale de l'adhésif de la pellicule (51), puis le rouleau chauffant (31) est déplacé en direction de la gaine isolante (3) et, après application du bord extérieur de la pellicule (51) contre la gaine isolante (3), est maintenu pendant un court laps de temps dans cette position soulevée, l'opération de revêtement proprement dite étant entamée par le fait que le rouleau chauffant (31) et la gaine isolante (3) sont entraînés séparément en sens opposés et à la même vitesse périphérique.

2. Procédé suivant la revendication 1, appliquée à une gaine isolante qui présente une fente longitudinale continue, caractérisé en ce que la gaine isolante refendue (3) est glissée sur un mandrin d'envidage (21) dont l'axe est parallèle à celui du rouleau chauffant (31) et qui comporte une languette de guidage et d'entraînement (22) qui s'étend verticalement vers le bas dans le sens radial et qui s'engage dans la fente longitudinale (2) de la gaine isolante (3), tandis que la section d'extrémité coudée vers le bas (54) de la pellicule (51) est amenée dans une position d'attente d'une manière telle que cette section soit, par son bord extérieur, tangente à un plan imaginaire qui s'étend dans le problongement de la face voisine de la Fente longitudinale de la gaine isolante (3).

3. Procédé suivant la revendication 2, caractérisé en ce que pour préparer une gaine isolante refendue (3), une gaine isolante non refendue (1) est glissée par un bras transporteur (12) de manière continue sur un mandrin récepteur (11) coaxial au mandrin d'envidage (21), la fente longitudinale (2) est alors ménagée dans la gaine isolante (1) par un organe de coupe (14), puis la gaine isolante refendue (3) est glissée complètement, sous l'effet de l'avancement du bras transporteur (12) qui se poursuit, sur le mandrin d'envidage (21) coaxial au mandrin récepteur (11).

4. Procédé suivant la revendication 2 ou 3, caractérisé en ce que lors de l'opération de revêtement proprement dite, le rouleau chauffant (31) et le mandrin d'envidage (21) sont entraînés jusqu'à ce qu'une rotation de la gaine isolante revêtue (4) d'environ 340 à 350° soit atteinte, le rouleau chauffant (31) est alors encore maintenu pendant un court laps de temps dans cette position en vue d'un collage final, puis est abaissé dans sa position initiale, tandis que simultanément le mandrin d'envidage (21) est extrait de la gaine isolante revêtue (4) et que la gaine isolante (4) est éloignée du poste de revêtement (30) par un dispositif de transfert (60).

5. Procédé suivant l'une quelconque des revendications 1 à 4, caractérisé en ce qu'à titre d'adhésif activable, ou utilise une couche de polyéthylène.

6. Procédé suivant la revendication 5, caractérisé en ce que pour le revêtement de la gaine isolante (3), on utilise une pellicule d'aluminium renforcée par un tissu de verre.

7. Procédé suivant la revendication 5 ou 6, caractérisé en ce qu'on utilise une pellicule (51) qui comporte une section d'extrémité (58) comprenant une bande d'adhésif s'étendant sur toute la largeur de la pellicule et couverte d'une bande de garde à arracher.

8. Dispositif pour exécuter le procédé suivant l'une quelconque des revendications 1 à 7 comportant:

—une poste d'alimentation pour la gaine isolante,

—un dispositif envideur pour la gaine isolante,

—un poste de revêtement qui comprend un rouleau chauffant pouvant être entraîné en rotation et destiné à activer l'adhésif de la pellicule, et,

—un dispositif d'amenée pour la pellicule perpendiculaire au poste de revêtement, caractérisé en ce que:

—le poste d'alimentation (10) comprend un mandrin récepteur (11) présentant une fente axiale, sur lequel la gaine isolante (1) peut être glissée au moyen d'un bras transporteur (12) pouvant être déplacé en direction du mandrin récepteur (11) et un organe de coupe (14) qui, pour éventuellement ménager une fente longitudinale continue (2) dans la gaine isolante (1) s'étend à travers la fente axiale (18) du mandrin récepteur (11),

—le dispositif envideur (20) comporte un mandrin d'envidage (21), pouvant être entraîné en rotation, sur lequel la gaine isolante refendue (3) peut encore être glissée au moyen du bras transporteur (12) du poste d'alimentation (10), le mandrin d'envidage (21) se raccordant coaxialement au mandrin récepteur (11), pouvant être amené en prise en bout avec celui-ci par une jonction à emboîtement tournante (17, 26) et comportant une languette de guidage et d'entraînement radiale saillante (22) destinée à être engagée dans la fente longitudinale (2) de la gaine isolante (3),

—le rouleau chauffant (31) pouvant être entraîné en rotation du poste de revêtement (30) est réglable en hauteur et est disposé en-dessous du mandrin envideur (21) parallèlement à l'axe de celui-ci,

—le dispositif d'amenée (50) pour la pellicule (51) comporte une barre (56) s'étendant parallèlement à l'axe du rouleau chauffant (31) et pouvant pivoter autour de son axe (55).

9. Dispositif suivant la revendication 8, caractérisé en ce qu'une dispositif de transfert (60) de la gaine isolante revêtue (4) est prévu dans la zone du poste de revêtement (30).

10. Dispositif suivant la revendication 8 ou 9, caractérisé en ce qu'un dispositif de refroidissement (70) pour la gaines isolantes revêtues (54) est prévu symétriquement par rapport au dispositif d'amenée (50).

**Patentansprüche**

1. Verfahren zum Kaschieren einer Rohrdämmschale, insbesondere aus Mineralfasern, gegebenenfalls mit einem durchgehenden Längsschlitz, mit einer Folie mit einer Klebeschicht, die durch Wärme aktiviert wird, bei dem die Rohrdämmschale mit einer Heizwalze zusammenarbeitet, die achsparallel in Drehung versetzt wird, während die Folie senkrecht zwischen der Rohrdämmschale und der Heizwalze geführt wird, wobei das Verfahren dadurch gekennzeichnet ist, daß zur Gewährleistung einer exakten Anfangsmitnahme der Folie (51) durch die Rohrdämmschale (3) die Folie (51) in eine Vorposition gebracht wird, der freie Endabschnitt (54) der Folie (51) dann leicht mit Hilfe einer ebenfalls achsparallelen Schiene (56) nach unten gebogen wird, dann die Folie in eine Warteposition gebracht wird, wobei ihr gebogener Endabschnitt (54) durch seinen äußeren Rand auf der höhenverstallbaren Heizwalze (31) zu liegen kommt, die anfänglich in einem geringen Abstand (57) von der äußeren Oberfläche der Rohrdämmschale (3) derart angeordnet ist, daß diese Position eine Anfangsaktivierung des Klebstoffes der Folie (51) bewirkt, wonach die Heizwalze (31) in Richtung der Rohrdämmschale (3) bewegt wird und nach Anlegen des äußeren Randes der Folie (51) gegen die Rohrdämmschale (3) während eines kurzen Zeitraumes in dieser angehobenen Stellung gehalten wird, wobei der eigentliche Kaschiervorgang dadurch durchgeführt wird, daß die Heizwalze (31) und die Rohrdämmschale (3) getrennt gegenläufig mit derselben Umfangsgeschwindigkeit angetrieben werden.

2. Verfahren nach Anspruch 1, angewendet auf eine Rohrdämmschale, die einen durchgehenden Längsschlitz aufweist, dadurch gekennzeichnet, daß die geschlitzte Rohrdämmschale (3) auf einen Wickeldorn (21), dessen Achse parallel zu derjenigen der Heizwalze (31) liegt, geschoben wird und der eine Führungs- und Mitnehmerleiste (22) umfaßt, die sich senkrecht nach unten radial erstreckt und die in den Längsschlitz (2) der Rohrdämmschale (3) eingreift, während der nach unten gebogene Abschnitt (54) der Folie (51) in einer solchen Art und Weise in eine Warteposition gebracht wird, daß dieser Abschnitt mit seinem äußeren Rand eine gedachte Ebene berührt, die sich in Verlängerung der benachbarten Seite des Längsschlitzes der Rohrdämmschale (3) erstreckt.

3. Verfahren nach Anspruch 2, dadurch gekennzeichnet, daß zur Herstellung einer geschlitzten Rohrdämmschale (3) eine ungeschlitzte Rohrdämmschale (1) durch einen Transportarm (12) kontinuierlich auf einen koaxial zu dem Wickeldorn (21) angeordneten Aufnahmedorn (11) aufgeschoben wird, und dabei der Längsschlitz (2) in die Rohrdämmschale (1) mittels eines Schneidorgans (14) angebracht wird, dann die geschlitzte Rohrdämmschale (3) unter der Wirkung der fortgesetzten Vorschubbewegung des Transportarmes (12) vollständig auf den zu dem Aufnahmedorn (11) koaxialen Wickeldorn (21) aufgeschoben wird.

4. Verfahren nach Anspruch 2 oder 3, dadurch gekennzeichnet, daß bei dem eigentlichen Kaschiervorgang die Heizwalze (31) und der Wickeldorn (21) solange angetrieben werden, bis eine Drehung der geschlitzten Rohrdämmschale (4) um umgefähr 340—350° erfolgt ist, wobei die Heizwalze (31) dann noch während einer kurzen Zeitspanne in dieser Position gehalten wird, um eine endgültige Klebung zu erzielen, dann in seine Angangsposition abgesenkt wird, während gleichzeitig der Wickeldorn (21) aus der kaschierten Rohrdämmschale (4) herausgezogen wird, und daß die Rohrdämmschale (4) mittels einer Übergabevorrichtung (60) von der Kaschierstation (30) entfernt wird.

5. Verfahren nach irgendeinem der Ansprüche 1 bis 4, dadurch gekennzeichnet, daß als aktivierbarer Kleber eine Polyethylenschicht verwendet wird.

6. Verfahren nach Anspruch 5, dadurch gekennzeichnet, daß zur Kaschierung der Rohrdämmschale (3) eine mit einem Glasgewebe verstärkte Aluminiumfolie verwendet wird.

7. Verfahren nach Anspruch 5 oder 6, dadurch gekennzeichnet, daß eine Folie (51) verwendet wird, die einen Endabschnitt (58) mit einem Klebestreifen umfaßt, der sich über die gesamte Länge der Folie erstreckt und mit einem Abziehstreifen abgedeckt ist.

8. Vorrichtung zur Durchführung des Verfahrens nach irgendeinem der Ansprüche 1 bis 7, mit:

—einer Beschickungsstation für die Rohrdämmschale,

—einer Wickelvorrichtung für die Rohrdämmschale,

—einer Kaschierstation, die eine Heizwalze (31) umfaßt, die in Drehung versetzbar ist und bestimmt ist, den Kleber der Folie zu aktivieren und

—einer Mitnahmeeinrichtung für die Folie senkrecht zur Kaschierstation, dadurch gekennzeichnet, daß

—die Beschickungsstation (10) einen Aufnahmedorn (11), der einen axialen Schlitz aufweist, auf den eine Rohrdämmschale (1) mittels eines Transportarmes (12), der in Richtung des Aufnahmedornes (11) verschiebbar ist, aufschiebbar ist sowie ein Schneidorgan (14) umfaßt, welches sich gegebenenfalls zum Anbringen eines durchgehenden Längsschlitzes (2) in die Rohrdämmschale (1) quer zu dem Axialschlitz (18) des Aufnahmedornes (11) erstreckt,

—die Wickeleinrichtung (20) einen in Drehung versetzbaren Wickeldorn (21) umfaßt, auf den die geschlitzte Rohrdämmschale (3) mittels eines Transportarmes (12) der Beschickungsstation (10) aufschiebbar ist, wobei der Wickeldorn (21) sich koaxial an den Aufnahmedorn (11) anschließt, der durch eine drehbare Steckverbindung (17, 26) mit diesem stirnseitig in Eingriff bringbar ist und eine radial abstehende Führungs- und Mitnahmeleiste (22) umfaßt, die bestimmt ist, in den Längsschlitz (2) der Rohrdämmschale (3) einzugreifen,

—die Heizwalze (31), die durch die Kaschierstation (30) in Drehung versetzbar ist, höhenverstellbar ist und unter dem Wickeldorn (21) parallel zu dessen Achse angeordnet ist,

—die Zuführeinrichtung (50) für die Folie (51) eine Schiene (56) umfaßt, die sich parallel zu der Achse der Heizwalze (31) erstreckt und um ihre Achse (55) schwenkbar ist.

9. Vorrichtung nach Anspruch 8, dadurch gekennzeichnet, daß eine Übergabeeinrichtung (60) der kaschierten Rohrdämmschale (4) im Bereich der Kaschierstation (30) vorgesehen ist.

10. Vorrichtung nach Anspruch 8 oder 9, dadurch gekennzeichnet, daß eine Kühleinrichtung (70) für die kaschierten Rohrdämmschalen (54) symmetrisch zu der Zuführeinrichtung (50) vorgesehen ist.

**Claims**

1. Method of lining an insulating shell, in particular made of mineral fibres and possibly comprising a continuous longitudinal slit, with a foil comprising an adhesive coating activated by heat, according to which the insulating shell cooperates with a rotatably driven, axially parallel heater roller, whilst the foil is moved in a perpendicular manner between the insulating shell and the heater roller, the process being characterised in that, in order to ensure that the foil (51) is initially driven precisely by the insulating shell (3), the foil (51) is moved into a preliminary position, the free end section (54) of the foil (51) then being slightly bent downwards by means of a rail (56), likewise axially parallel, then the foil is moved into a waiting position, its bent end section (54) coming to rest with its outer edge on the vertically adjustable heater roller (31), positioned initially at a slight distance (57) from the outer surface of the insulating shell (3), in such a way that, in this position, an initial activation of the adhesive of the foil (51) is produced, then the heater roller (31) is moved in the direction of the insulating shell (3) and, after the outer edge of the foil (51) has been applied against the insulating shell (3), is held in this raised position for a short period of time, the actual lining operation being started by the fact that the heater roller (31) and the insulating shell (3) are driven separately in opposite directions and at the same peripheral velocity.

2. Process as claimed in claim 1, applied to an insulating shell comprising a continuous longitudinal slit, characterised in that the slit insulating shell (3) is slid onto a winding mandrel (21) the axis of which is parallel to the axis of the heater roller (31) and which comprises a guiding and driving strip (22) which extends vertically downwards in a radial direction and engages in the longitudinal slit (2) of the insulating shell (3), whilst the downwardly bent end section (54) of the foil (51) is moved into a waiting position in such a way that the outer edge of this section is tangential to an imaginary plane extending in the elongation of the adjacent face of the longitudinal slit in the insulating shell (3).

3. Process as claimed in claim 2, characterised in that, in order to prepare a slit insulating shell (3), an insulating shell (1) without a slit is continuously slid by means of a conveyer arm (12) onto a receiver mandrel (11) coaxial with respect to the winding mandrel (21), the longitudinal slit (2) then being provided in the insulating shell (1) by a cutting member (14), then the slit insulating shell (3) being slid completely onto the winding mandrel (21) coaxial to the receiver mandrel (11) under the effect of the continuing advance of the conveyer arm (12).

4. Process as claimed in claim 2 or 3, characterised in that during the actual lining process, the heater roller (31) and the winding mandrel (21) are driven until the lined insulating shell (4) has rotated through approximately 340 to 350°, the heater roller (31) is then still held for a short time in this position for a final adhesion process, then it is lowered into its initial position, whilst at the same time the winding mandrel (21) is extracted from the lined insulating shell (4) and the insulating shell (4) is moved away from the lining station (30) by a transfer device (60).

5. Process as claimed in any one of claims 1 to 4, characterised in that a coating of polyethylene is used as an activatable adhesive.

6. Process as claimed in claim 5, characterised in that an aluminium foil reinforced with glass fabric is used for lining the insulating shell (3).

7. Process as claimed in claim 5 or 6, characterised in that a foil (51) comprising an end section (58) having an adhesive strip extending over the entire width of the foil and covered with a protective tear-off strip is used.

8. Device for performing the process as claimed in any one of claims 1 to 7, comprising:
—a feed station for the insulating shell;
—a winding device for the insulating shell;
—a lining station comprising a heater roller which can be rotatably driven and is intended to activate the adhesive on the foil; and
—a device for delivering the foil perpendicular to the lining station; characterised in that:
—the delivery station (10) comprises a receiver mandrel (11) having an axial slit, on which the insulating shell (1) may be slid by means of a conveyer arm (12) which can be moved in the direction of the receiver mandrel (11), and a cutting member (14) which extends through the axial slit (18) of the receiver mandrel (11) in order to make a continuous longitudinal slit (2) in the insulating shell (1) if necessary;
—the winding device (20) comprises a winding mandrel (21), which can be rotatably driven and on which the slit insulating shell (3) may again be slid by means of the conveyer arm (12) of the delivery station (10), it being possible for the winding mandrel (11) which is coaxially connected to the receiver mandrel (11) to be moved into engagement at the end with the winding mandrel by means of a rotating interlocking junction (17, 26) which comprises a radially projecting guide and drive strip (22) for engaging in the longitudinal slit (2) in the insulating shell:
—the heater roller (31) which can be rotatably driven from the lining station (31) is vertically adjustable and disposed below the winding mandrel (21) parallel to the axis thereof;
—the delivery device (50) for the foil (51) comprises a rail (56) which extends parallel to the axis of the heater roller (31) and can pivot about its shaft (55).

9. Device as claimed in claim 8, characterised in that a transfer device (60) for the lined insulating shell (4) is provided in the area of the lining station (30).

10. Device as claimed in claim 8 or 9, characterised in that a cooling device (70) for the lined insulating shells (54) is provided symmetrically with respect to the delivery device (50).

Fig. 1

Fig.2

FIG. 3a

FIG. 3b

FIG. 3c

FIG. 3d

Fig. 3